# EUROPEAN PATENT APPLICATION

(11) **EP 4 765 397 A1**
(43) Date of publication of application: **24.06.2026**
(21) Application number: 25807924.3
(22) Date of filing: 24.01.2025
(51) Int. Cl.: H01M 50/242, H01M 50/249, H01M 50/293, B60L 50/64

(54) **BATTERY PACK AND VEHICLE INCLUDING SAME**

(30) Priority: 24.05.2024 KR 20240067979
(71) Applicant: LG Energy Solution, Ltd., Seoul 07335 (KR)
(72) Inventor: PARK, Jin-Yong, Daejeon 34122 (KR); KIM, Seung-Joon, Daejeon 34122 (KR); KIM, Jong-Jin, Daejeon 34122 (KR); LEE, Geum-Pyo, Daejeon 34122 (KR); LEE, Chung-Ho, Daejeon 34122 (KR)
(74) Representative: Plasseraud IP
(86) International application number: PCT/KR2025/001540
(87) International publication number: WO 2025/244241

(57) **Abstract**

Disclosed is a battery pack and a vehicle including the same. The battery pack includes a plurality of battery cells; a pack case configured to accommodate the plurality of battery cells; and a rigidity reinforcing member coupled to the pack case to reinforce rigidity of the pack case.

## Description

### TECHNICAL FIELD

This application is based on and claims priority from Korean Patent Application No. 10-2024-0067979, filed on May 24, 2024, with the Korean Intellectual Property Office, the disclosure of which is incorporated herein in its entirety by reference.

The present disclosure relates to a battery pack and a vehicle including the same, and more specifically, to a battery pack capable of sufficiently protecting a battery cell inside a pack case, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module that includes a module case capable of protecting battery cells and a plurality of battery cells stacked and inserted into the module case, and a battery pack that includes a plurality of battery modules.

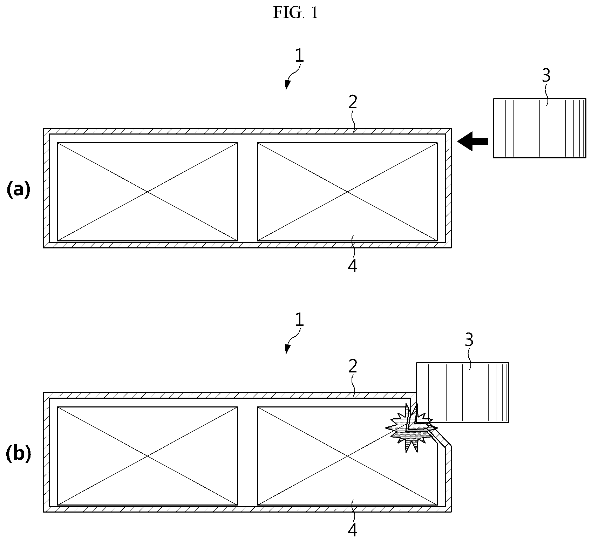

FIGS. 1(a) and 1(b) are drawings for illustrating a process in which a battery cell is damaged when a battery pack of the prior art collides with an external structure or the like.

If the pack case 2 of the battery pack 1 moves close to the external structure 3 and collide the external structure 3 due to various reasons as shown in FIG. 1(a), as shown in FIG. 1(b), the external structure 3 presses the pack case 2, and as a result, the battery cell 4 disposed inside the pack case 2 is damaged, and there is a problem that a short circuit or ignition occurs in the battery cell 4.

### DISCLOSURE

### Technical Problem

Therefore, the present disclosure is directed to providing a battery pack that may protect battery cells inside a pack case and prevent a short circuit or ignition of the battery cells even when the battery pack collides with an external structure, and a vehicle including the same.

In addition, the present disclosure is directed to providing a battery pack, which may be easily coupled by bolts even when welding is difficult, and a vehicle including the same.

In addition, the present disclosure is directed to providing a battery pack capable of maintaining sufficient rigidity, and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery cells; a pack case configured to accommodate the plurality of battery cells; and a rigidity reinforcing member coupled to the pack case to reinforce rigidity of the pack case.

In an embodiment, the pack case may include a barrier frame, and the rigidity reinforcing member may be coupled to the barrier frame.

In an embodiment, the barrier frame may include a first barrier member located at one side; and a second barrier member coupled to the first barrier member.

In an embodiment, the first barrier member may include a first plate arranged in a vertical direction; and a first support coupled to an upper side of the first plate.

In an embodiment, the second barrier member may include a second plate arranged in the vertical direction; and a second support coupled to a middle portion of the second plate.

In an embodiment, the first plate and the second plate may be arranged to face each other, and the first support may be in contact with the second support at an upper side of the second support.

In an embodiment, the pack case may include a lower frame, the battery pack may comprise a support member coupled to the lower frame, and the support member may be arranged between the first plate and the second plate and may be in contact with the second support.

In an embodiment, the rigidity reinforcing member may be coupled to at least one of the first support and the second support.

In an embodiment, the first barrier member and the second barrier member may be made of aluminum and may be coupled to the support member using a fastening member.

In an embodiment, the rigidity reinforcing member may be coupled to at least one of the first support and the second support using a fastening member.

In an embodiment, the rigidity reinforcing member may include a body portion having a fastening hole formed therein; a connection portion bent and extended from the body portion; and a pair of wing portions coupled to the connection portion.

In an embodiment, the pair of wing portions may be coupled obliquely to the connection portion to form an inclined portion.

In an embodiment, the inclined portion may be formed so that the connection portion becomes narrower from a lower side to an upper side.

In an embodiment, the pack case may include a side frame, and the rigidity reinforcing member may be in contact with the side frame.

Meanwhile, according to another aspect of the present disclosure, there may be provided a vehicle including at least one battery pack described above.

### Advantageous Effects

The embodiments of the present disclosure have the effect of protecting battery cells inside the pack case and preventing a short circuit or ignition of the battery cells even when the battery pack collides with an external structure.

In addition, there is an effect that allows easy coupling by bolts even in cases where welding is difficult.

In addition, there is an effect that may maintain sufficient rigidity.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1(a) and 1(b) are drawings for illustrating a process in which a battery cell is damaged when a battery pack of the prior art collides with an external structure or the like.
FIG. 2 is a perspective view showing a battery pack according to an embodiment of the present disclosure entirely, in which an upper frame is exploded.
FIG. 3 is a cross-sectional view taken along line A-A' of FIG. 2.
FIG. 4 is a diagram showing the battery pack according to an embodiment of the present disclosure, in which battery cells are removed and a barrier frame is depicted.
FIG. 5 is an enlarged view showing part B of FIG. 4, in which a rigidity reinforcing member is separated from a barrier frame.
FIG. 6 is a perspective view showing the barrier frame provided in the battery pack according to an embodiment of the present disclosure.
FIG. 7 is a diagram viewed along the direction of arrow C in FIG. 6.
FIG. 8 is an exploded perspective view showing the barrier frame provided in the battery pack according to an embodiment of the present disclosure.
FIG. 9 is a perspective view showing the rigidity reinforcing member in the battery pack according to an embodiment of the present disclosure.
FIG. 10 is a diagram viewed along arrow D in FIG. 9.
FIG. 11 is a diagram showing a case where an external structure collides with the battery pack according to an embodiment of the present disclosure.
FIG. 12 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

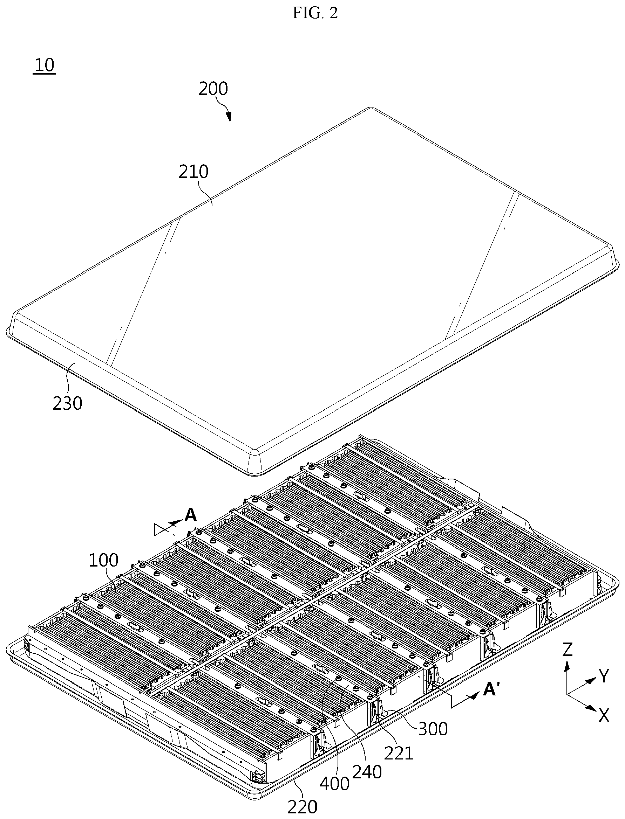

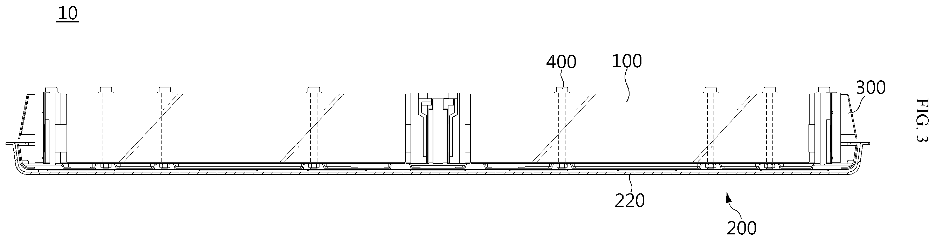

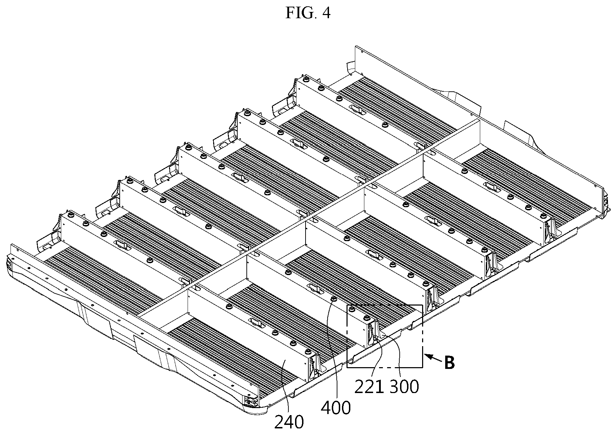

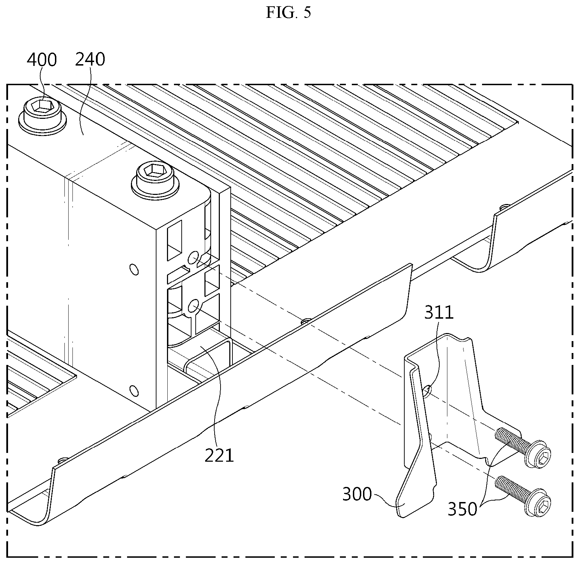

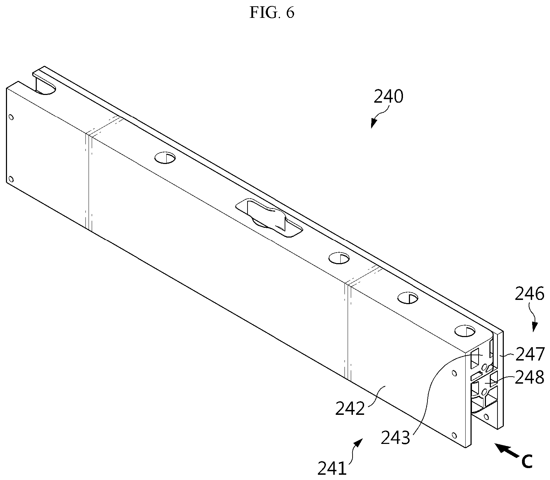

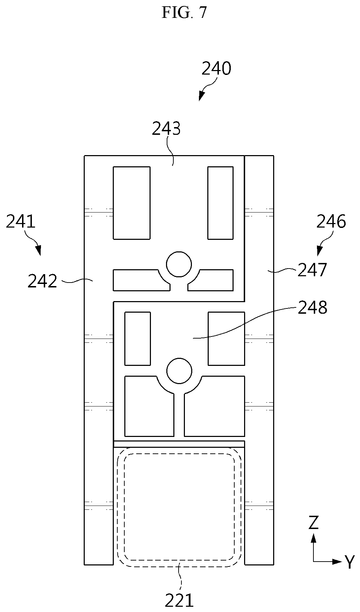

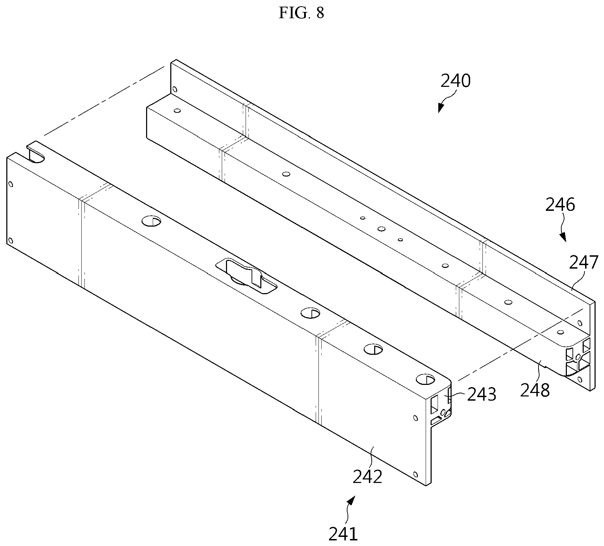

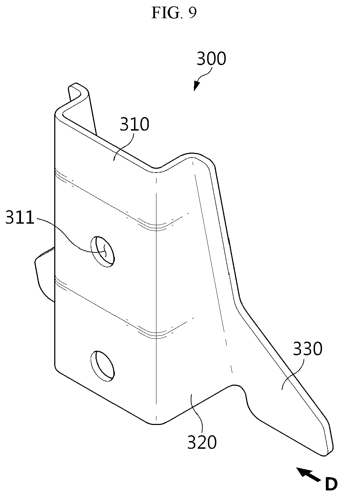

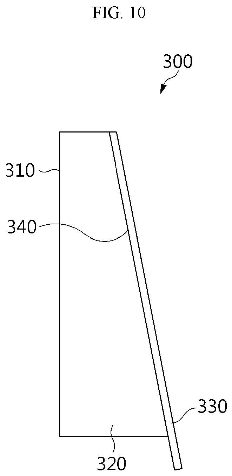

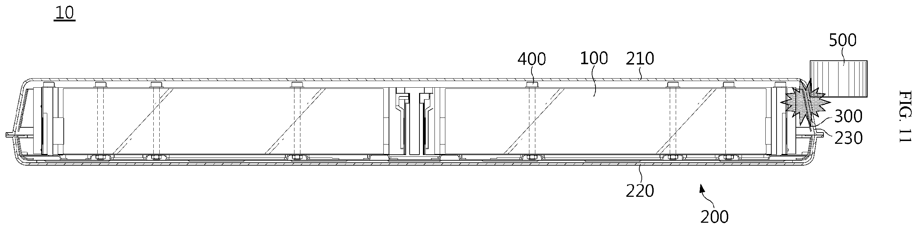

FIG. 2 is a perspective view showing a battery pack according to an embodiment of the present disclosure entirely, in which an upper frame is exploded, FIG. 3 is a cross-sectional view taken along line A-A' of FIG. 2, FIG. 4 is a diagram showing the battery pack according to an embodiment of the present disclosure, in which battery cells are removed and a barrier frame is depicted, FIG. 5 is an enlarged view showing part B of FIG. 4, in which a rigidity reinforcing member is separated from a barrier frame, FIG. 6 is a perspective view showing the barrier frame provided in the battery pack according to an embodiment of the present disclosure, FIG. 7 is a diagram viewed along the direction of arrow C in FIG. 6, FIG. 8 is an exploded perspective view showing the barrier frame provided in the battery pack according to an embodiment of the present disclosure, FIG. 9 is a perspective view showing the rigidity reinforcing member in the battery pack according to an embodiment of the present disclosure, FIG. 10 is a diagram viewed along arrow D in FIG. 9, and FIG. 11 is a diagram showing a case where an external structure collides with the battery pack according to an embodiment of the present disclosure.

Referring to FIG. 1, a battery pack 10 according to an embodiment of the present disclosure may be configured to include a plurality of battery cells 100, a pack case 200, and a rigidity reinforcing member 300.

The plurality of battery cells 100 may be stacked. The battery cells 100 may have various structures, and further, the plurality of battery cells 100 may be stacked in various ways.

The battery cell 100 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 100 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 100, or the positive electrode lead and the negative electrode lead may be arranged in the same direction with respect to the longitudinal direction of the battery cell 100.

For example, the battery cell 100 may be accommodated in a module case (not shown), and the module case containing the battery cell 100 may be accommodated in the pack case 200 to form a battery pack 10. However, the present disclosure is not limited thereto, and the module case may be removed to reduce the weight and volume, and in this case, the battery cell 100 may be directly accommodated in the pack case 200 of the battery pack 10.

According to this method, more battery cells 100 may be accommodated in the space previously occupied by the module case of the battery module within the battery pack 10, thereby increasing space efficiency and improving battery capacity.

Hereinafter, for convenience of explanation, the following description focuses on a case where the battery cell 100 is directly accommodated in the pack case 200 without a module case. However, an embodiment using a module case is not completely excluded, and if necessary, the pouch-type battery cell 100 of each embodiment of the present disclosure may be configured to be accommodated in the module case provided in the battery module.

Here, a cell cover (not shown) may be provided to support the battery cell 100 so that the battery cell 100 may be directly accommodated in the pack case 200. The cell cover may have various shapes, and may be configured in, for example, an 'n' shape, a 'u' shape, or a '⊂' shape surrounding at least three sides of one battery cell 100. However, the present disclosure is not limited thereto.

In addition, the battery pack 10 according to this embodiment may include, for example, a control module configured to control charging and discharging of the pouch-type battery cell 100. The control module may include, for example, a battery management system (BMS) and a battery blocking unit, and may be accommodated inside the pack case 200 together with the battery cell 100 and the cell cover.

Referring to FIG. 2, the plurality of battery cells 100 are accommodated in the pack case 200.

The pack case 200 may be configured to include, for example, an upper frame 210, a lower frame 220, a side frame 230, and a barrier frame 240.

The upper frame 210 may be coupled to the side frame 230. Here, the upper frame 210 may be formed integrally with the side frame 230, but is not limited thereto.

The lower frame 220 is configured to accommodate a plurality of battery modules. The lower frame 220 may be formed in a rectangular plate shape, but is not limited thereto. The lower frame 220 forms the bottom of the pack case 200.

The side frame 230 may be coupled to the upper frame 210, or in another embodiment, the side frame 230 may be configured to extend from an edge of the lower frame 220 toward the upper side. The side frame 230 defines the height of the pack case 200 and forms a preset space between the side frame 230 and the lower frame 220.

In addition, a plurality of battery cells 100 are mounted in the space between the side frame 230 and the lower frame 220. The side frame 230 may be provided in plurality, and referring to FIG. 2, the plurality of side frames 230 may include a long side frame having a relatively long length and a short side frame having a relatively short length. Alternatively, the lengths of the side frames 230 may all be the same.

Referring to FIG. 2, the barrier frame 240 is coupled to the lower frame 220. In addition, the barrier frame 240 may be provided in plurality, and the plurality of battery cells 100 may be arranged between the plurality of barrier frames 240. That is, the barrier frame 240 is interposed between the plurality of battery cells 100.

Here, referring to FIGS. 4 and 5, the rigidity reinforcing member 300 may be coupled to the barrier frame 240.

Referring to FIGS. 6 to 8, the barrier frame 240 may be configured to include a first barrier member 241 and a second barrier member 246.

The first barrier member 241 is located at one side. In FIG. 7, the first barrier member 241 is located at the left side based on FIG. 7 (left side based on the Y direction of FIG. 7), but the first barrier member 241 may also be located at the right side based on FIG. 7. In other words, the side where the first barrier member 241 is located may correspond to both the left and right sides.

The first barrier member 241 may include a first plate 242 and a first support 243. The first plate 242 may be arranged in a vertical direction (Z direction of FIG. 7) based on to FIG. 7. Also, the first support 243 may be coupled to an upper side of the first plate 242 (see FIG. 8).

The second barrier member 246 is coupled to the first barrier member 241. The second barrier member 246 is located at the other side of the first barrier member 241. In FIG. 7, the second barrier member 246 is located at the right side based on FIG. 7 (the right side in the Y direction of FIG. 7), but the second barrier member 246 may also be located at the left side based on FIG. 7. In other words, the other side where the second barrier member 246 is located may correspond to both the right and the left.

The second barrier member 246 may include a second plate 247 and a second support 248. The second plate 247 may be arranged in a vertical direction (Z direction of FIG. 7) based on FIG. 7. In addition, the second support 248 may be coupled to a middle portion of the second plate 247 (see FIG. 8).

Referring to FIGS. 6 and 7, the first plate 242 and the second plate 247 may be arranged to face each other. In addition, if the first plate 242 and the second plate 247 are arranged to face each other, the first support 243 may be configured to contact the second support 248 at the upper side of the second support 248.

Here, the first barrier member 241 and the second barrier member 246 may be coupled by a bolt 400 (see FIG. 2).

In addition, referring to FIGS. 4 and 5, the barrier frame 240 may be coupled to the support member 221. Here, the support member 221 may be coupled to the lower frame 220 of the pack case 200, and referring to FIG. 4, the barrier frame 240 may be coupled to and supported by the support member 221. Here, the lower frame 220 may be formed of, for example, multiple layers of plates, or a heatsink (not shown) may be coupled to the lower frame 220.

Referring to FIGS. 4 and 7, the support member 221 may be positioned between the first plate 242 and the second plate 247 and may be in contact with the second support 248, and the second support 248 and the support member 221 may be coupled by fastening using the bolt 400.

In particular, even if the lower frame 220 or the barrier frame 24 is made of a material that is difficult to weld, the first barrier member 241 the second barrier member 246 are fastened by the bolt 400, and the second support 248 and the support member 221 are also fastened by the bolt 400, which allows easy coupling.

To explain this, in an embodiment of the present disclosure, at least a portion of the pack case 200 in the battery pack 10, for example the lower frame 220, may be made of steel for reinforcing rigidity or the like.

In addition, when the barrier frame 240 includes the first barrier member 241 and the second barrier member 246 as described above and has an overlapping structure, since it is not easy to manufacture steel into an overlapping structure, the first barrier member 241 and the second barrier member 246 may be made of aluminum. That is, the barrier frame 240 may be made of aluminum.

However, if the first barrier member 241 and the second barrier member 246 are made of aluminum, it is difficult to weld the first barrier member 241 and the second barrier member 246 with the lower frame 220 made of steel. Even in cases where welding is difficult due to material properties, the first barrier member 241 and the second barrier member 246 may be easily coupled using a fastening member such as a bolt 400, and may also be coupled to the support member 221 using a fastening member such as the bolt 400. However, the fastening member is not limited to the bolt 400.

That is, as described above, the first barrier member 241 includes a first plate 242 and a first support 243, the second barrier member 246 includes a second plate 247 and a second support 248, the first support 243 is in contact with the second support 248 at the upper side of the second support 248 and is fastened by the bolt 400, and the support member 221 is in contact with the second support 248 so that the second support 248 and the support member 221 are fastened by the bolt 400, which provides an effect that enables coupling with each other even when welding is difficult.

Referring to FIGS. 2 to 4, the rigidity reinforcing member 300 is coupled to the pack case 200 to reinforce the rigidity of the pack case 200. The rigidity reinforcing member 300 may be coupled to various parts of the pack case 200, and, for example, may be coupled to the barrier frame 240.

The rigidity reinforcing member 300 may be coupled to at least one of the first support 243 and the second support 248. In FIG. 4, the rigidity reinforcing member 300 is coupled to both the first support 243 and the second support 248 (see FIG. 5), but is not limited thereto. For example, the rigidity reinforcing member 300 may be coupled only to the first support 243, or only to the second support 248.

Here, the rigidity reinforcing member 300 may be coupled to at least one of the first support 243 and the second support 248 by various types of fastening members. For example, the fastening member may include a connecting pin, a screw, or a bolt, but the following description focuses on the case where the fastening member is a bolt 350 (see FIG. 5).

Referring to FIGS. 9 and 10, the rigidity reinforcing member 300 may include a body portion 310, a connection portion 320, and a pair of wing portions 330.

A fastening hole 311 is formed in the body portion 310. As shown in FIG. 5, the bolt 350 may fasten the rigidity reinforcing member 300 and the first support 243 or the second support 248 through the fastening hole 311 of the body portion 310.

In addition, the connection portion 320 is bent and extended from the body portion 310. The connection portion 320 may be bent from the body portion 310 at various angles, and, for example, may be bent at a right angle, but not limited thereto.

Also, the pair of wing portions 330 are coupled to the connection portion 320. The connection portion 320 and the pair of wing portions 330 may be configured to prevent the rigidity reinforcing member 300 from rotating after being coupled to the first support 243 or the second support 248.

For example, if two fastening holes 311 are formed at the upper side and the lower side of the body portion 310 and the body portion 310 is fastened to both the first support 243 and the second support 248 using the bolts 350, the rigidity reinforcing member 300 will not rotate.

However, if one fastening hole 311 is formed in the body portion 310 and the body portion 310 is fastened to only the first support 243 using the bolt 350 or the body portion 310 is fastened to only the second support 248 using the bolt 350, the rigidity reinforcing member 300 may rotate about the bolt 350 as a rotational axis.

In this case, as a modified embodiment, in the battery pack 10 according to an embodiment of the present disclosure, the connection portion 320 bent from the body portion 310 may be configured to contact the inner side of the first plate 242 and the inner side of the second plate 247, respectively, and the pair of wing portions 330 may be configured to contact the outer side of the first plate 242 and the outer side of the second plate 247, respectively, to prevent rotation of the rigidity reinforcing member 300.

Referring to FIG. 10, the pair of wing portions 330 may be coupled obliquely to the connection portion 320 to form an inclined portion 340. Here, the inclined portion 340 may be formed such that the connection portion 320 becomes narrower from the lower side to the upper side based on FIG. 10. However, the present disclosure is not limited thereto.

Referring to FIG. 11, the rigidity reinforcing member 300 may be in contact with the side frame 230 of the pack case 200. In addition, as shown in FIG. 11, even if an external structure 500 collides with the pack case 200 and pressure is applied to the pack case 200, the rigidity reinforcing member 300 supports the pack case 200 to prevent deformation of the pack case 200, thereby preventing damage to the battery cell 100 inside the pack case 200. Therefore, it is possible to prevent the battery cells 100 from being short-circuited or the battery cells 100 from being ignited.

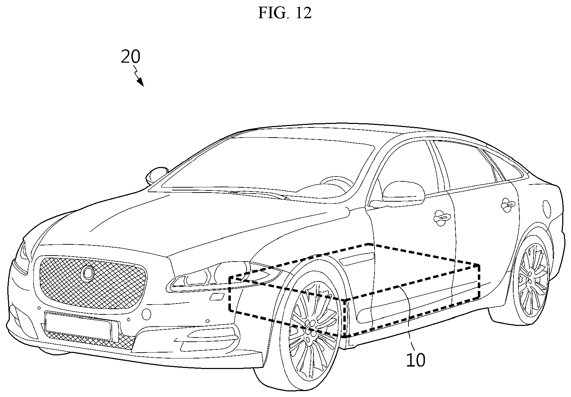

FIG. 12 is a drawing for illustrating a vehicle including the battery pack 10 according to each embodiment of the present disclosure.

Referring to FIG. 12, the vehicle 20 according to an embodiment of the present disclosure may include one or more battery packs 10 according to each of the embodiments described above. Here, the vehicle 20 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery cells;
a pack case configured to accommodate the plurality of battery cells; and
a rigidity reinforcing member coupled to the pack case to reinforce rigidity of the pack case.

2. The battery pack according to claim 1,
wherein the pack case includes a barrier frame, and
wherein the rigidity reinforcing member is coupled to the barrier frame.

3. The battery pack according to claim 2,
wherein the barrier frame includes:
a first barrier member located at one side; and
a second barrier member coupled to the first barrier member.

4. The battery pack according to claim 3,
wherein the first barrier member includes:
a first plate arranged in a vertical direction; and
a first support coupled to an upper side of the first plate.

5. The battery pack according to claim 4,
wherein the second barrier member includes:
a second plate arranged in the vertical direction; and
a second support coupled to a middle portion of the second plate.

6. The battery pack according to claim 5,
wherein the first plate and the second plate are arranged to face each other, and
wherein the first support is in contact with the second support at an upper side of the second support.

7. The battery pack according to claim 6,
wherein the pack case includes a lower frame,
wherein the battery pack comprises a support member coupled to the lower frame, and
wherein the support member is arranged between the first plate and the second plate and is in contact with the second support.

8. The battery pack according to claim 5,
wherein the rigidity reinforcing member is coupled to at least one of the first support and the second support.

9. The battery pack according to claim 8,
wherein the first barrier member and the second barrier member are made of aluminum and are coupled to the support member using a fastening member.

10. The battery pack according to claim 8,
wherein the rigidity reinforcing member is coupled to at least one of the first support and the second support using a fastening member.

11. The battery pack according to claim 1,
wherein the rigidity reinforcing member includes:
a body portion having a fastening hole formed therein;
a connection portion bent and extended from the body portion; and
a pair of wing portions coupled to the connection portion.

12. The battery pack according to claim 11,
wherein the pair of wing portions are coupled obliquely to the connection portion to form an inclined portion.

13. The battery pack according to claim 12,
wherein the inclined portion is formed so that the connection portion becomes narrower from a lower side to an upper side.

14. The battery pack according to claim 1,
wherein the pack case includes a side frame, and
wherein the rigidity reinforcing member is in contact with the side frame.

15. A vehicle comprising the battery pack according to any one of claims 1 to 14.
